# EUROPEAN PATENT APPLICATION

(11) **EP 2 194 423 A1**
(43) Date of publication of application: **09.06.2010**
(21) Application number: 09157650.4
(22) Date of filing: 08.04.2009
(51) Int. Cl.: G02F 1/1333

(54) **LCD panel holding device and method thereof**

(30) Priority: 04.12.2008 TW 97147090
(71) Applicant: Hannspree, Inc., Taipei City 114 (TW)
(72) Inventor: Huang, Wen-Hung, Tucheng City Taipei County 236 (TW)
(74) Representative: Fuchs

(57) **Abstract**

An LCD panel holding device is provided, wherein each LCD panel has a first surface, a second surface and a plurality of adjacent lateral surfaces connecting the first and second surfaces. The LCD panel holding device includes a frame and a plurality of holders. The frame receives the LCD panel and includes a first inner surface corresponding to the first surface, a second inner surface corresponding to the second surface and a plurality of adjacent inner lateral surfaces corresponding to the lateral surfaces. The plurality of holders is disposed on the inner lateral surfaces. When the LCD panel is inserted into the frame, the plurality of holders elastically deform up to the elastic limit due to the size difference between the LCD panel and the plurality of holders to engage and abut the lateral surfaces of the LCD panel so that the frame can receive and position the LCD panel.

## Description

### CROSS REFERENCE TO RELATED APPILCATIONS

This Application claims priority of Taiwan Patent Application No. 97147090, filed on December 04, 2008, the entirety of which is incorporated by reference herein.

### BACKGROUND OF THE INVENTION

### Field of the Invention

The invention relates to an LCD panel holding device, and in particular relates to an LCD panel holding device with elastic sheets engaging LCD panels.

### Description of the Related Art

In a conventional liquid crystal display, an LCD panel is secured in a frame by bolts or screws as disclosed in R.O.C. (Taiwan) patent No. 531018 and 335914. In another conventional structure, the LCD panel is attached to the frame by a connector as disclosed in US patent No. 6,671,012 and 6,859,357. In the described structures, frames of different sizes are applied to LCD panels of different sizes, which increases manufacture costs.

### BRIEF SUMMARY OF INVENTION

An embodiment of an LCD panel holding device for LCD panels of various sizes is provided, wherein each LCD panel has a first surface, a second surface and a plurality of adjacent lateral surfaces connecting the first and second surfaces. The LCD panel holding device comprises a frame and a plurality of holders. The frame receives the LCD panel and comprises a first inner surface corresponding to the first surface, a second inner surface corresponding to the second surface and a plurality of adjacent inner lateral surfaces corresponding to the lateral surfaces. The plurality of holders are disposed on the inner lateral surfaces. When the LCD panel is inserted into the frame, the plurality of holders elastically deform up to the elastic limit due to the size difference between the LCD panel and the plurality of holders to engage and abut the lateral surfaces of the LCD panel so that the frame can receive and position the LCD panel.

The holder is formed in a shape of curved sheet comprising two ends fixed to the inner lateral surfaces and an elastic portion which is curved and protrudes from the inner lateral surfaces. When the LCD panel is inserted into the frame, the elastic portion engages the lateral surface of the LCD panel.

An anti-slip structure is formed on the surface of the elastic portion. The anti-slip structure comprises an anti-slip rubber layer fixed to the surface of the elastic portion. The anti-slip structure may also, instead, comprise a rough or granular structure formed on the surface of the elastic portion.

The plurality of holders is disposed on the second inner surface. When the LCD panel is inserted into the frame, the plurality of holders disposed on the second inner surface engage the second surface to make the first surface abut the first inner surface.

The frame further comprises an opening through which the LCD panel is inserted into the frame. The LCD panel holding device further comprises a cover closes the opening, wherein the plurality of holders is also disposed on the cover. When the cover closes the opening, the holders engage and abut one of the lateral surfaces of the LCD panel.

A detailed description is given in the following embodiments with reference to the accompanying drawings.

### BRIEF DESCRIPTION OF DRAWINGS

The present invention can be more fully understood by reading the subsequent detailed description and examples with references made to the accompanying drawings, wherein:

Fig. 1 is a schematic view of an LCD panel holding device of the invention receiving an LCD panel;

Fig. 2 is a side view of an LCD panel holding device of the invention receiving an LCD panel;

Fig. 3 is a perspective view of a holder of the invention; and

Fig. 4 shows the LCD panel holding device holding LCD panels of various sizes.

### DETAILED DESCRIPTION OF INVENTION

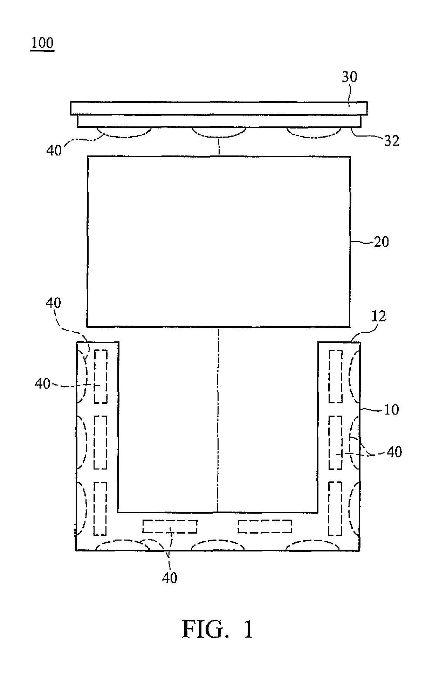

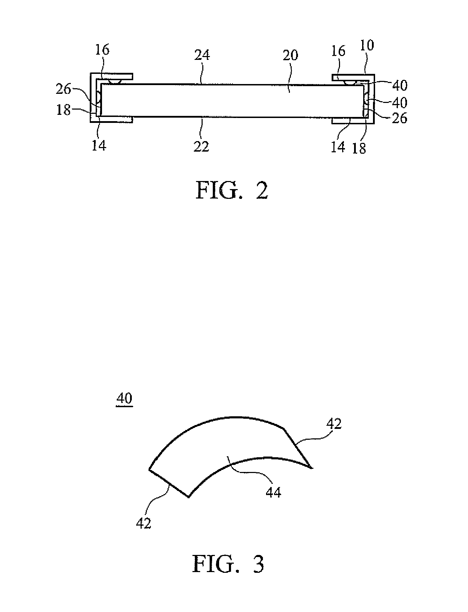

Referring to Fig. 1, the LCD panel holding device 100 of the invention comprises a frame 10 and a cover 30. An opening 12 is formed on the top of the frame 10. An LCD panel 20 is inserted into the frame 10 via the opening 12. The cover 30 comprises an inner surface 32 closes the opening 12, whereby the LCD panel 20 is fixed inside the frame 10. Referring to Fig. 2, the frame 10 is rectangular shape and comprises a first inner surface 14, a second inner surface 16 and three inner lateral surfaces 18. The LCD panel 20 is also rectangular shape and comprises a first surface 22, a second surface 24 and four lateral surfaces 26. In this embodiment, the first inner surface 14 is perpendicular to the inner lateral surfaces 18, and the second inner surface 16 is also perpendicular to the inner lateral surfaces 18. When the LCD panels 20 is inserted into the frame 10, the first surface 22 corresponds to the first inner surface 14, the second surface 24 corresponds to the second inner surface 16, and the four lateral surfaces 26 correspond to the three inner lateral surfaces 18 and the inner surface 32 of the cover 30.

As shown in Fig. 1, a plurality of holders 40 are disposed on three inner lateral surfaces 18 and the inner surface 32 with equal distance from each other. The three inner lateral surfaces 18 and the inner surface 32 form a closed rectangle. The plurality of holders 40, as shown in Fig. 3, are formed in a shape of curved sheets and each holder comprises two ends 42 and an elastic portion 44. The two ends 42 are fixed to the inner lateral surface 18 or the inner surface 32. The elastic portion 44 is curved and protrudes from the inner lateral surface 18. When the LCD panel 20 is inserted into the frame 10, since the LCD panel 20 engages with (pushes against) the elastic portion 44, the lateral surfaces 26 pushes the elastic portion 44 to elastically deform, whereby the elastic portion 44 engages the lateral surfaces 26 to hold the LCD panel 20 in the frame 10.

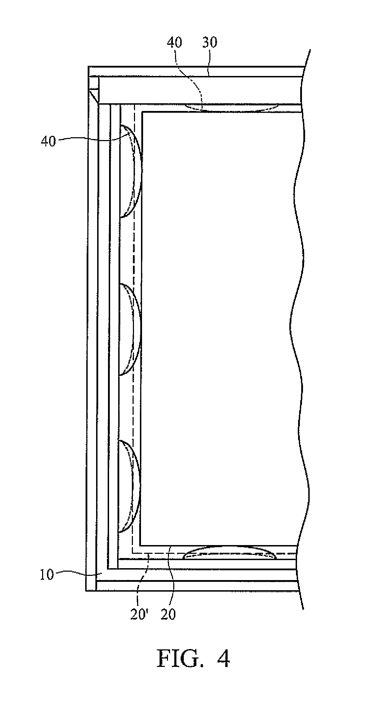

The elastic portion 44 of the holder 40 deform, up to the elastic limit, in accordance with LCD panels 20 of various sizes, so that the frame 10 can receive LCD panels 20 of various sizes. For example, in Fig. 4, the larger LCD panel 20' represents in dash line, and the smaller LCD panel 20 represents in solid line. LCD Panels of different sizes cause the elastic portion 44 to deform differently.

Referring to Fig. 2, in addition to the three inner lateral surfaces 18 and the inner surface 32, the plurality of holders 40 can also be disposed on the second inner surface 16. When the LCD panel 20 is inserted into the frame 10, the plurality of holders 40 are disposed on the second surface 24, whereby the first surface 22 abuts the first inner surface 14 of the frame 10.

Meanwhile, to prevent the plurality of holders 40 to slip when engaging with the LCD panel 10, an anti-slip structure is formed on the surface of the elastic portion 44. For example, an anti-slip rubber layer is disposed on the surface of the elastic portion 44, or a rough structure or a granular structure is formed on the surface of the elastic portion 44 by sand blasting.

The LCD panel holding device of the invention can easily secures a LCD panel in a frame. Additionally, a complex connector structure is not needed, nor is a complex assembly process. The different elastic deformations of the plurality of holders allow the frame to receive different LCD panel sizes. Thus, only one frame is needed to receive LCD panels of various sizes, which reduces the cost.

While the invention has been described by way of example and in terms of preferred embodiment, it is to be understood that the invention is not limited thereto. To the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. An LCD panel holding device for LCD panels of various sizes, wherein each LCD panel has a first surface, a second surface and a plurality of adjacent lateral surfaces connecting the first and second surfaces, comprising
a frame receiving the LCD panel and comprising a first inner surface corresponding to the first surface, a second inner surface corresponding to the second surface and a plurality of adjacent inner lateral surfaces corresponding to the lateral surfaces; and
a plurality of holders disposed on the inner lateral surfaces, wherein when the LCD panel is inserted into the frame, the plurality of holders elastically deform up to the elastic limit due to the size difference between the LCD panel and the plurality of holders to engage and abut the lateral surfaces of the LCD panel so that the frame can receive and position the LCD panel.

2. The LCD panel holding device as claimed in claim 1, wherein the holder is shaped in a curved sheet comprising two ends fixed to the inner lateral surfaces and an elastic portion which is curved and protrudes from the inner lateral surfaces, and when the LCD panel is inserted into the frame, the elastic portion engages the lateral surface of the LCD panel.

3. The LCD panel holding device as claimed in claim 2, wherein an anti-slip structure is formed on the surface of the elastic portion.

4. The LCD panel holding device as claimed in claim 1, wherein the plurality of holders are also disposed on the second inner surface; when the LCD panel is inserted into the frame, the plurality of holders disposed on the second inner surface engage the second surface to make the first surface abut the first inner surface.

5. The LCD panel holding device as claimed in claim 1, wherein the frame further comprises an opening through which the LCD panel is inserted into the frame.

6. The LCD panel holding device as claimed in claim 5 further comprising a cover closing the opening, wherein the cover comprises an inner surface, the plurality of holders are disposed on the inner surface, and when the cover closes the opening, the plurality of holders engage and abut one of the lateral surfaces of the LCD panel.

7. The LCD panel holding device as claimed in claim 1, wherein the plurality of holders are disposed on the inner lateral surfaces with equal distance from each other.

8. The LCD panel holding device as claimed in claim 1, wherein the inner lateral surfaces and the inner surface of the cover form a rectangular.

9. An LCD panel holding method, comprising the following steps:
providing a frame comprising a plurality of inner lateral surfaces on which a plurality of holders are disposed;
inserting an LCD panel into the frame, wherein the plurality of holders elastically deform up to the elastic limit due to the size difference between the LCD panel and the plurality of holders to engage and abut the lateral surfaces of the LCD panel so that the frame can receive and position the LCD panel.

10. The LCD panel holding method as claimed in claim 9, wherein the holder is shaped in a curved sheet comprising two ends fixed to the inner lateral surfaces and an elastic portion which is curved and protrudes from the inner lateral surfaces, wherein when the LCD panel is inserted into the frame, the elastic portion engages the lateral surface of the LCD panel.

11. The LCD panel holding method as claimed in claim 10 further comprising the following step:
providing an anti-slip structure formed on the surface of the elastic portion.

12. The LCD panel holding method as claimed in claim 11, wherein the anti-slip structure comprises an anti-slip rubber layer fixed to the surface of the elastic portion.

13. The LCD panel holding method as claimed in claim 11, wherein the anti-slip structure comprises an anti-slip rubber layer fixed to the surface of the elastic portion.

14. The LCD panel holding method as claimed in claim 11, wherein the anti-slip structure comprises a rough structure formed on the surface of the elastic portion.

15. The LCD panel holding method as claimed in claim 11, wherein the anti-slip structure comprises a granular structure formed on the surface of the elastic portion.
